Europäisches Patentamt

European Patent Office

Office européen des brevets

(11) Veröffentlichungsnummer: **0 255 612 B1**

(12) **EUROPÄISCHE PATENTSCHRIFT**

(45) Veröffentlichungstag der Patentschrift: **29.04.92**

(21) Anmeldenummer: **87109811.7**

(22) Anmeldetag: **07.07.87**

(51) Int. Cl.5: **B25J 9/02**, B25J 9/04

(54) **Portalsystem.**

(30) Priorität: **06.08.86 DE 3626610**

(43) Veröffentlichungstag der Anmeldung:
**10.02.88 Patentblatt 88/06**

(45) Bekanntmachung des Hinweises auf die
Patenterteilung:
**29.04.92 Patentblatt 92/18**

(84) Benannte Vertragsstaaten:
**AT BE CH DE ES FR GB IT LI NL SE**

(56) Entgegenhaltungen:
EP-A- 0 180 829      DE-A- 2 442 725
DE-A- 3 440 604      DE-A- 3 502 631
DE-U- 8 511 473      FR-A- 1 249 842
FR-A- 2 186 331

KUKA-Industrieroboter, Serie IR 400 von
April 1985 & Sept. 1985 (p. 22-26)

(73) Patentinhaber: **Fibro GmbH**

**W-7102 Weinsberg(DE)**

(72) Erfinder: **Massmann, Hans-Joachim, Ing.**
**Gottfried-Keller-Strasse 10**
**W-6953 Gundelsheim(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**W-8000 München 22(DE)**

## Beschreibung

Die Erfindung betrifft ein Portalsystem zur mehrdimensionalen Bewegung von Transport- und Arbeitsmitteln in einem vorgebbaren Arbeitsraum, bestehend aus einem zur ortsfesten Anbringung bestimmten Portal mit einer über die Portallänge in x-Richtung verfahrbaren Grundeinheit sowie dieser Grundeinheit zugeordneten, linear vertikal in z-Richtung und horizontal in y-Richtung verstellbaren Anordnungen, wobei die linear in z-Richtung verfahrbare Anordnung mit der Grundeinheit zusammengefaßt ist.

Portalsysteme und Standroboter befinden sich in der Praxis vielfältig im Einsatz. Sie werden dazu verwendet, Transport und Arbeitsmittel innerhalb eines vorgegebenen Raumes in gesteuerter Weise zu bewegen.

Bekannte Portalsysteme erfordern jedoch einen erheblichen menschlichen und elektrischen Aufwand, wenn gefordert wird, daß in einem kubischen Raum jeder Punkt bewegungsmäßig angesteuert werden kann. Überschreitet der zu bedienende Raum eine gewisse Größe, so ist es bei den bekannten Anordnungen erforderlich, zwecks Vermeidung einer mechanischen Überbeanspruchung des Systems Doppelportalanordnungen zu verwenden mit zwei Längsführungsschienen, die über Querträger miteinander verbunden sind und demgemäß auch eine Doppelschlittenanordnung für die Bewegung des Systems in einer horizontalen Richtung benötigen.

In der Druckschrift "KUKA, Industrieroboter Serie IR 400", Druckdatum 485 bzw. 985, ist ein sechsachsiger Portalroboter beschrieben, bei dem auf einem als Viereck-Rahmen ausgebildeten Doppelportal ein sich zwischen zwei zueinander parallelen Rahmenteilen erstreckender Schlitten in einer horizontalen Ebene und auf diesem Horizontal-Schlitten ein sowohl horizontal als auch vertikal verfahrbarer Schlitten gelagert ist, der arbeitsraumseitig alternativ mit einer einachsigen, zweiachsigen oder dreiachsigen Zentralhand bzw. einer Winkel- und Schwenkhand ausgerüstet werden kann. Dieses Portalsystem besitzt im Vergleich zu dem bedienbaren Arbeitsraum einen erheblichen Raumbedarf, ist hinsichtlich des tragenden Portalaufbaus konstruktiv aufwendig und macht es erforderlich, zur Realisierung von Bewegungen in der Horizontalebene jeweils erhebliche Massen zu beschleunigen und wieder abzubremsen.

Aufgabe der Erfindung ist es, ein Portalsystem der eingangs angegebenen Art in der Weise auszubilden, daß der zur Bedienung eines vergleichsweise großen kubischen Raumes erforderliche mechanische und elektrische Aufwand für das Bewegen von Transport- und/oder Arbeitsmitteln möglichst minimiert wird.

Gelöst wird diese Aufgabe nach der Erfindung im wesentlichen dadurch, daß das Portal aus zwei vertikalen und einem horizontalen Träger besteht, daß die linear in z-Richtung verfahrbare Anordnung arbeitsraumseitig über eine erste vertikale Rotationsachse mit der in y-Richtung verfahrbaren Anordnung gekoppelt ist, die mit Abstand zur ersten vertikalen Rotationsachse wenigstens eine weitere vertikale Rotationsachse aufweist, und daß zur Ausführung von beliebigen Bewegungen in der x-y-Ebene einerseits die vertikalen Rotationsachsen und andererseits diese vertikalen Rotationsachsen gekoppelt mit der in x-Richtung verfahrbaren Grundeinheit ansteuerbar sind.

Durch diese Ausgestaltung unter Verwendung eines Einschienenportals, das aus zwei vertikalen und einem horizontalen Träger, die fest miteinander verbunden sind, besteht, ist zum einen sichergestellt, daß jeder Punkt innerhalb eines kubischen Arbeitsraumes rechnerisch zu ermitteln und anzusteuern ist, wobei durch Koppelung der Bewegungen der Grundeinheit in x-Richtung mit der die beiden gegeneinander versetzten Rotationsachsen aufweisenden Anordnung insbesondere auch eine geradlinige Bewegung in y-Richtung mit kleineren Gerätemassen möglich ist.

Der kinematische Aufbau dieses Einschienen-Portalsystems führt zu einer wesentlichen Reduzierung des Gestellaufwands sowie Führungs- und Antriebsaufwandes und auch des elektromechanischen Aufwands. Außerdem ist die zu bewegende Gesamtmasse geringer und damit auch der Energieaufwand für die wechselnden dynamischen Bewegungen.

Durch die Erfindung wird somit erreicht, daß eine wesentliche Raumersparnis erzielt wird, daß unter Minimierung des rechnerischen Aufwands eine Ansteuerung von vorgegebenen Punkten im Arbeitsraum aus beliebiger Richtung möglich ist und daß eine verbesserte Kraftaufnahme hinsichtlich der in y-Richtung auftretenden Kräfte und damit eine erhöhte Stabilität durch die feste Verbindung des horizontalen Trägers mit den beiden vertikalen Trägern erhalten wird.

Die Grundeinheit ist bevorzugt als fahrbarer Schlitten ausgebildet, dessen Besonderheit darin besteht, daß in ihm der verfahrbare Teil der der z-Richtung zugeordneten Anordnung geführt und insbesondere auch der zugehörige Antrieb untergebracht ist.

Im Hinblick auf die Erzielung eines bezüglich der Kräfteverteilung im System besonders günstigen Anordnung und minimaler Abmessung im Arbeitsraum ist es von Vorteil, daß die Antriebe für die Rotationsachsen vorzugsweise an dem vom Arbeitsraum abgewandten Ende des verfahrbaren Teils der der z-Richtung zugeordneten Anordnung angebracht sind.

Zweckmäßigerweise sind dabei die Antriebe mit den Rotationsachsen über ein Getriebe verbunden, das zumindest im Bereich des in der Grundeinheit geführten Teils der in z-Richtung verfahrbaren Anordnung aus koaxialen, drehbar gelagerten Hülsenteilen besteht.

Die beiden gegeneinander versetzten, parallel zueinander verlaufenden Rotationsachsen sind bevorzugt in einem Gehäuseteil untergebracht, das über ein das gesteuerte Verschwenken dieses Gehäuseteils bewirkendes Hülsenteil sowie ein Getriebe mit dem zugehörigen Antrieb verbunden ist.

Eine weitere Ausführungsform der Erfindung ist das die beiden zueinander parallelen Rotationsachsen enthaltende Gehäuseteil in ein erstes und ein zweites Teilgehäuse unterteilt, wobei diese beiden Teilgehäuse wiederum über Doppel-Rotationsachsen miteinander gekoppelt sind. Auf diese Weise wird ein Verschwenken der ausgangsseitigen Rotationsachse über 360° möglich, so daß über diese dritte, gekoppelte rotatorische Achse beliebige Lageänderungen von Transport- oder Arbeitsmitteln im Raum möglich werden.

Das Portalsystem nach der Erfindung kann mit über Druckmittel betätigte Stellglieder verbunden werden, so daß auf diese Weise Lageänderungen von Transport- oder Arbeitsmitteln unabhängig von der Systembewegung durchgeführt werden können.

Die Rotationsachse bzw. die Rotationsachsen können ferner neben ihrer Funktion zur Bahnbeschreibung weitere Funktionen übernehmen. Insbesondere können sie praktisch zusätzlich als Wechseleinrichtung für Transport- und Arbeitsmittel benutzt werden. Ein Beispiel stellt die Verwendung als Doppelgreifer zum Werkzeug- oder Werkstückwechsel dar.

Die durch das erfindungsgemäße Portalsystem ermöglichten Bewegungskombinationen von Translationsachsen mit Rotationsachsen gestatten es, sowohl in der Ebene als auch im Raum Linearbewegungen und Bahnbewegungen exakt und schnell durchzuführen, und zwar mit einem im Vergleich zu herkömmlichen Anordnungen wesentlich verringerten mechanischem und elektrischem Aufwand.

Die Erfindung wird nachfolgend anhand von Ausführungsbeispielen unter Bezugnahme auf die Zeichnung näher erläutert; in der Zeichnung zeigt:

Fig. 1    eine schematische Darstellung zur Erläuterung des Grundaufbaus eines Portalsystems nach der Erfindung,

Fig. 2    eine schematische Schnittdarstellung der Bewegungseinheiten des Systems nach Fig. 1, und

Fig. 3    eine Ausführungserweiterung der Grundanordnung nach Fig. 2.

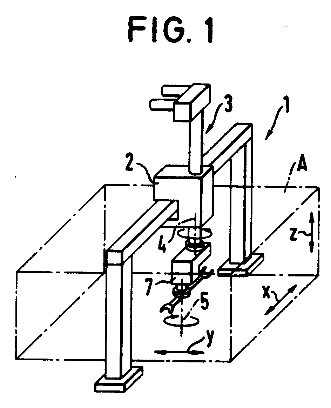

Fig. 1 zeigt ein Portal 1 aus zwei vertikalen Trägern und einem die vertikalen Träger miteinander verbindenden horizontalen Träger, auf dem eine Grundeinheit (2) entsprechend der x-Richtung verfahrbar ist.

In dieser Grundeinheit 2 ist eine entsprechend der z-Achse verfahrbare Anordnung 3 geführt.

Am unteren Ende dieser Anordnung 3 ist über eine Rotationsachse 4 ein Gehäuseteil 7 angelenkt, das mit Abstand von der Rotationsachse 4 eine zu dieser parallele weitere Rotationsachse 5 enthält.

Den beiden Rotationsachsen 4, 5 zugeordneten Antriebe 4', 5' sind am oberen Ende der entsprechend der z-Richtung verfahrbaren Anordnung 3 vorgesehen.

Mittels der in ihrem Grundaufbau beschriebenen und in Fig. 1 gezeigten Anordnung kann jeder Punkt innerhalb des kubischen Arbeitsraumes A angefahren werden.

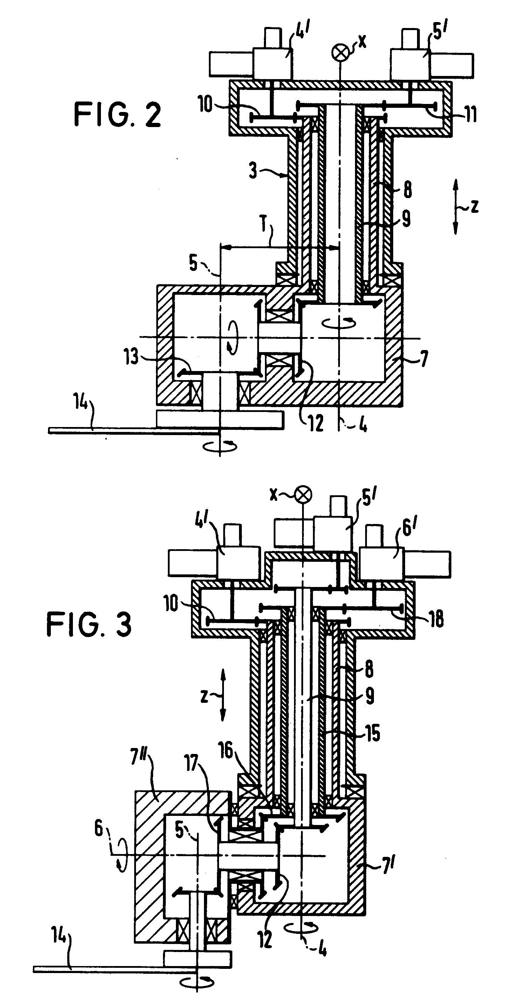

Fig. 2 zeigt den Aufbau der kombinierten, auf dem Horizontalträger des Portals verfahrbaren Anordnung. Die Grundeinheit 2, die - wie angedeutet - in x-Richtung verfahrbar ist, ist zwecks besserer Übersichtlichkeit der Darstellung nicht im einzelnen gezeigt.

In der Grundeinheit 2 vertikal, d.h. in z-Richtung verfahrbar ist die gesamte, mit den Bezugszeichen 3 gekennzeichnete Anordnung, die im Führungsbereich vorzugsweise aus zueinander konzentrischen Teilen aufgebaut ist.

Auf ein Außen- bzw. Trägergehäuse sind Antriebe 4', 5' aufgesetzt, die den Rotationsachsen 4 bzw. 5 zugeordnet sind.

Der Antrieb 4' ist über ein Getriebe 10 mit einem Hülsenteil 8 gekoppelt, das mit dem den beiden Rotationsachsen 4, 5 zugeordneten Gehäuseteil 7 fest verbunden ist. Dieses Gehäuseteil 7 kann daher mittels des Antriebs 4' um die Achse 4 geschwenkt bzw. gedreht werden.

Der Antrieb 5' ist über ein Getriebe 11 mit einem koaxial innerhalb des bereits erwähnten Hülsenteils 8 angeordneten weiteren Hülsenteil 9 gekoppelt, das wiederum über einen Kegeltrieb 12 mit einem horizontalen Achsstummel verbunden ist, der über einen weiteren Kegeltrieb 13 die Rotationsachse 5 antreibt, und an der weitere Arbeits- oder Betätigungsorgane 14, 17 befestigbar ist.

Der Abstand zwischen den beiden zueinander parallelen, gegenseitig versetzten Rotationsachsen 4, 5 ist in Fig. 2 mit T bezeichnet.

Es ist zu erkennen, daß die in Fig. 2 schematisch gezeigte Anordnung zum einen über die Grundeinheit 2 in x-Richtung sowie in z-Richtung verfahrbar ist, und daß Bewegungen in y-Richtung durch entsprechende Ansteuerung der Rotationsachsen 4 und 5 gezielt durchführbar sind.

Die Ausführungsvariante nach Fig. 3 unterscheidet sich von der Ausführungsform nach Fig. 2 durch das Vorhandensein einer dritten rotatorischen Achse 6.

Dazu ist das die beiden Rotationsachsen 4, 5 nach Fig. 2 enthaltende Gehäuse unterteilt in ein erstes Teilgehäuse 7′ und in ein zweites Teilgehäuse 7″, und zwischen diesen beiden Teilgehäusen ist eine Verschwenkung möglich, welche von einem benachbart den Antrieben 4′, 5′ angeordneten Antrieb 6′ gesteuert wird. Verbunden ist der Antrieb 6′ mit dem Teilgehäuse 7″ über ein Getriebe 18 und übереin Hülsenteil 15, das koaxial zu den den anderen Rotationsachsen zugeordneten Hülsenteilen 8, 9 verläuft, sowie über einen Kegeltrieb 16, der es ermöglicht, das Teilgehäuse 7″ um die horizontal verlaufende Rotationsachse 6 zu verschwenken, wodurch gleichzeitig die Rotationsachse 5 verschwenkt wird, welche ihrerseits über ein sich im Teilgehäuse 7″ befindendes Kegelgetriebe 17 antreibbar ist.

Diese zusätzliche dritte, gekoppelte rotatorische Achse 6 ermöglicht beliebige Lageänderungen von Transport- oder Arbeitsmitteln im Raum und wirkt sich in vielen Anwendungsfällen insbesondere auch hinsichtlich der erzielbaren Bewegungs- bzw. Ansteuergeschwindigkeiten vorteilhaft aus.

## Patentansprüche

1. Portalsystem zur mehrdimensionalen Bewegung von Transport- und Arbeitsmitteln in einem vorgebbaren Arbeitsraum,
   bestehend aus einem zur ortsfesten Anbringung bestimmten Portal (1) mit einer über die Portallänge in x-Richtung verfahrbaren Grundeinheit (2) sowie dieser Grundeinheit (2) zugeordneten, linear vertikal in z-Richtung und horizontal in y-Richtung verstellbaren Anordnungen (3, 7), wobei die linear in z-Richtung verfahrbare Anordnung (3) mit der Grundeinheit (2) zusammengefaßt ist,
   dadurch **gekennzeichnet,**
   daß das Portal (1) aus zwei vertikalen und einem horizontalen Träger besteht,
   daß die linear in z-Richtung verfahrbare Anordnung (3) arbeitsraumseitig über eine erste vertikale Rotationsachse (4) mit der in y-Richtung verfahrbaren Anordnung (7) gekoppelt ist, die mit Abstand zur ersten vertikalen Rotationsachse (4) wenigstens eine weitere vertikale Rotationsachse (5) aufweist,
   und daß zur Ausführung von beliebigen Bewegungen in der x-y-Ebene einerseits die vertikalen Rotationsachsen (4, 5) und andererseits diese vertikalen Rotationsachsen (4, 5) gekoppelt mit der in x-Richtung verfahrbaren Grundeinheit (2) ansteuerbar sind.

2. Portalsystem nach Anspruch 1, dadurch **gekennzeichnet,** daß jeder Punkt des vom Portal (1) überspannten und sich beidseits der Portalebene erstrekkenden kubischen Arbeitsraums (A) durch Linearbewegungen in x- und z-Richtung in Verbindungen mit Bewegungen der beiden gegeneinander versetzten Rotationsachsen (4, 5) geradlinig oder bahnförmig ansteuerbar ist.

3. Portalsystem nach Anspruch 1 oder 2, dadurch **gekennzeichnet,** daß die Grundeinheit (2) als verfahrbarer Schlitten ausgebildet ist und daß in diesem Schlitten der verfahrbare Teil der der z-Richtung zugeordneten Anordnung (3) geführt und der zugehörige Antrieb untergebracht ist.

4. Portalsystem nach einem der vorhergehenden Ansprüche, dadurch **gekennzeichnet,** daß die Antriebe (4′, 5′) für die Rotationsachsen (4, 5) an dem vom Arbeitsraum (A) abgewandten Ende des verfahrbaren Teils der der z-Richtung zugeordneten Anordnung (3) angebracht sind.

5. Portalsystem nach Anspruch 4, dadurch **gekennzeichnet,** daß die Antriebe (4′, 5′) mit den Rotationsachsen (4, 5) über ein Getriebe verbunden sind,
   das zumindest im Bereich des in der Grundeinheit (2) geführten Teils der in z-Richtung verfahrbaren Anordnung (3) aus koaxialen, drehbar gelagerten Hülsenteilen (8, 9) besteht.

6. Portalsystem nach einem der vorhergehenden Ansprüche, dadurch **gekennzeichnet,** daß die beiden gegeneinander versetzten, parallel zueinander verlaufenden Rotationsachsen (4, 5) in einem Gehäuseteil (7) ausgebildet sind, das über ein das gesteuerte Verschwenken des Gehäuseteils (7) bewirkendes Hülsenteil (8) sowie ein Getriebe (10) mit dem zugehörigen Antrieb (4′) verbunden ist.

7. Portalsystem nach einem oder mehreren der vorhergehenden Ansprüche, dadurch **gekennzeichnet,** daß das den beiden zueinander parallelen Rotationsachsen (4, 5) zugeordnete Gehäuse (7) in ein erstes Teilgehäuse (7′) und in ein zweites Teilgehäuse (7″) unterteilt ist und daß beide Teilgehäuse über eine horizontale Doppel-Rotationsachsenanordnung (6) miteinander verbunden sind.

**8.** Portalsystem nach Anspruch 7, dadurch **gekennzeichnet,** daß das zweite Gehäuseteil (7″) ebenfalls über ein Hülsenteil (15), das koaxial zu den übrigen Antriebshülsenteilen (8, 9) verläuft, antreibbar ist, und zwar mittels eines Antriebsmotors (6′) sowie eines Getriebes (18), die benachbart zu den die übrigen Rotationsachsen (4, 5) antreibenden Motoren (4′, 5′) angeordnet sind.

**9.** Portalsystem nach einem oder mehreren der vorhergehenden Ansprüche, dadurch **gekennzeichnet,** daß an den Umlenkstellen der Antriebsverbindungen jeweils Kegeltriebe (12, 13, 16) vorgesehen sind.

**10.** Portalsystem nach einem oder mehreren der vorhergehenden Ansprüche, dadurch **gekennzeichnet,** daß mit der ausgangsseitigen Rotationsachse (5) Arbeitsorgane (14) kuppelbar sind, die im Falle einer Ausbildung als Stellglieder (17) zusätzliche, über Druckmittel betätigbare Elemente zur Vornahme systembewegungsunabhängiger Lageänderungen von Transport- oder Arbeitsmitteln bilden.

**11.** Portalsystem nach einem oder mehreren der vorhergehenden Ansprüche, dadurch **gekennzeichnet,** daß die Rotationsachsen (4; 5; 6) neben ihrer Funktion zur Bahnbeschreibung zusätzlich als Wechseleinrichtung für Transport- und Arbeitsmittel, insbesondere in Form eines Doppelgreifers zum Werkzeug- oder Werkstückwechsel, verwendet werden.

**Claims**

**1.** Portal system for the multidimensional movement of transport and/or working means in a predeterminable working space, the portal system comprising a portal (1) intended to be fixedly mounted at a mounting location, this portal having a basic unit (2) movable over the portal length in the x-direction, and also means (3, 7) associated with the basic unit (2) and movable vertically linearly in the z-direction and horizontally in the y-direction, with the means (3) which is movable in the z-direction being combined with the basic unit (2), characterized in that

the portal comprises two vertical and one horizontal carriers;

in that the means (3) which is movable linearly in the z-direction is coupled on the working space side by means of a first vertical rotation axis (4) with the means (7) which is movable in the y-direction, the latter having at least one further vertical rotation axis (5) at a distance from the first vertical rotation axis (4);

and in that for effecting any movements in the x-y-plane on the one hand the vertical rotation axes (4, 5) are controllable, and on the other hand these vertical rotation axes (4, 5) are controllable couplably with the basic unit (2) which is movable in the x-direction.

**2.** Portal system in accordance with claim 1, characterized in that each point of the cubic working space (A) bridged by the portal (1) and extending on both sides of the plane of the portal can be reached by straightline or track-line movements, through linear movements in the x- and z-direction in conjunction with movements about the two mutually displaced axes of rotation (4, 5).

**3.** Portal system in accordance with claim 1 or 2, characterized in that the basic unit (2) is formed as a movable carriage; and in that the movable part of the means or structure (3) associated with the z-direction is guided in this carriage, with its associated drive being accommodated in this carriage.

**4.** Portal system in accordance with any one of the preceding claims, characterized in that the drives (4', 5') for movement about the rotational axes (4, 5) are mounted at the end remote from the working space (A) of the movable part of the means (3) associated with the z-direction.

**5.** Portal system in accordance with claim 4, characterized in that the drives (4', 5') are connected with the rotational axes (4, 5) via a transmission system, that includes coaxially disposed and rotatably journalled sleeve parts (8, 9) at least in the region of the part guided in the basic unit (2) of the means (3) movable in the z-direction.

**6.** Portal system in accordance with any one of the preceding claims, characterized in that the two mutually displaced rotational axes (4, 5) which extend parallel to one another are defined within a housing part (7) which is connected with the associated drive (4') via a sleeve Part (8) which brings about the controlled swivelling of the housing part (7) and also via a transmission (10).

**7.** Portal system in accordance with one or several of the preceding claims, characterized in that the housing (7) associated with the two mutually parallel rotational axes (4, 5) is subdivided into a first housing part (7') and also a second housing part (7"); and in that both housing parts are connected together via a horizontal double-rotational axis arrangement (6).

8. Portal system in accordance with claim 7, characterized in that the second housing part (7") is likewise drivable by a sleeve part (15) which extends coaxial to the remaining drive sleeve parts (8, 9), and indeed by means of a drive motor (6') and also a transmission (18) which are arranged adjacent to the motors (4', 5') which drive the remaining rotational axes (4, 5).

9. Portal system in accordance one or several of the preceding claims, characterized in that respective bevel gear drives (12, 13, 16) are provided at the change of direction positions of the drive connections.

10. Portal system in accordance with one or several of the preceding claims, characterized in that working members (14) can be coupled with the output side rotational axle (5) and, when constructed as positioning members (17), form additional pressure medium actuatable elements for effecting positional changes of transport means or working means independent of movement of the system.

11. Portal system in accordance one or several of the preceding claims, characterized in that the rotational axes (4, 5, 6) are used, in addition to their function of describing the path of movement, as a changer for transport means and working means, in particular in the form of a double-arm changer for tool or workpiece changing.

**Revendications**

1. Système de portique destiné à déplacer des appareils de transport et/ou de travail dans un espace de travail prédéterminable, le système de portique comprenant un portique (1) destiné à être monté de manière fixe en un emplacement de montage, ledit portique comprenant une unité de base (2) déplaçable sur la longueur du portique suivant la direction x, et des organes (3, 7) associés à l'unité de base (2) et déplaçables verticalement linéairement suivant la direction z et horizontalement suivant la direction y, les organes (3) déplaçables dans la direction z étant combinés avec l'unité de base (2),
caractérisé en ce que le portique comprend deux supports verticaux et un support horizontal;
en ce que les organes (3) déplaçables linéairement suivant la direction z sont couplés du côté de l'espace de travail au moyen d'un premier axe de rotation vertical (4) avec les organes (7) déplaçables suivant la direction y, ces derniers ayant au moins un autre axe de rotation vertical (5) situé à distance du premier axe de rotation vertical (4);
et en ce que, pour effectuer un quelconque mouvement dans le plan x-y, d'une part les axes de rotation verticaux (4, 5) peuvent être commandés, et d'autre part ces axes de rotation verticaux (4, 5) peuvent être commandés de façon couplée avec l'unité de base (2) qui est déplaçable suivant la direction x.

2. Système de portique selon la revendication 1, caractérisé en ce que chaque point de l'espace de travail cubique (A) surmonté par le portique (1) et s'étendant de part et d'autre du plan du portique peut être atteint par des mouvements en ligne droite ou suivant un trajet, par des mouvements linéaires suivant les directions x et z en coopération avec des mouvements autour des deux axes de rotation mutuellement espacés (4, 5).

3. Système de portique selon l'une ou l'autre des revendications 1 et 2, caractérisé en ce que l'unité de base (2) est formée en tant que chariot mobile; et en ce que la partie mobile des organes ou structures (3) associées à la direction z est guidée dans ce chariot, l'entraînement associé à cette partie mobile étant logé dans ce chariot.

4. Système de portique selon l'une quelconque des revendications précédentes, caractérisé en ce que les entraînements (4', 5') destinés au déplacement autour des axes de rotation (4, 5) sont montés à l'extrémité éloignée de l'espace de travail de la partie mobile des organes (3) associés à la direction z.

5. Système de portique selon la revendication 4, caractérisé en ce que les entraînements (4', 5') sont connectés aux axes de rotation (4, 5) via un système de transmission, lequel comprend des parties de fourreau (8, 9) montées en rotation et disposées coaxialement, au moins dans la région de la partie des organes (3) déplaçables suivant la direction z qui est guidée dans l'unité de base (2).

6. Système de portique selon l'une quelconque des revendications précédentes, caractérisé en ce que les deux axes de rotation mutuellement espacés (4, 5) qui s'étendent mutuellement parallèlement sont définis dans une partie de boîtier (7) qui est reliée à l'entraînement associé (4') au moyen d'une partie de fourreau (8) qui provoque le pivotement commandé de la partie de boîtier (7) et au moyen d'une transmission (10).

7. Système de portique selon l'une quelconque des revendications précédentes, caractérisé en ce que le boîtier (7) associé aux deux axes de rotation mutuellement parallèles (4, 5) est subdivisé en une première partie de boîtier (7') et en une seconde partie de boitier (7"); et en ce que les deux parties de boîtier sont reliées l'une à l'autre au moyen d'un agencement à double axe de rotation horizontal (6).

8. Système de portique selon la revendication 7, caractérisé en ce que la seconde partie de boîtier (7") peut également être entraînée au moyen d'une partie de fourreau (15) qui s'étend coaxialement aux autres parties de fourreau d'entraînement (8, 9), et ceci au moyen d'un moteur d'entraînement (6') ainsi qu'une transmission (18), qui sont agencés au voisinage des moteurs (4', 5') qui entraînent les autres axes de rotation (4, 5).

9. Système de portique selon l'une quelconque des revendications précédentes, caractérisé en ce qu'il est prévu des transmissions à renvoi d'angle (12, 13, 16) respectives aux emplacements de changement de direction des liaisons d'entraînement.

10. Système de portique selon l'une quelconque des revendications précédentes, caractérisé en ce que des organes de travail (14) peuvent être accouplés à l'axe de rotation du côté sortie (5) et, lorsque réalisés en tant qu'organes de positionnement (17), constituent des organes de positionnement additionnels actionnables par média sous pression afin d'effectuer des changements de position des appareils de transport ou des appareils de travail, indépendamment des mouvements du système.

11. Système de portique selon l'une quelconque des revendications précédentes, caractérisé en ce que les axes de rotation (4, 5, 6) sont utilisés, en plus de leur fonction de description du trajet de déplacement, en tant que dispositif d'échange pour des appareils de transport et des appareils de travail, en particulier sous la forme d'un dispositif échangeur à double bras pour échanger des outils ou des pièces.

# FIG. 1

FIG. 2

FIG. 3